# DEMANDE DE BREVET EUROPEEN

(11) **EP 2 485 062 A2**
(43) Date de publication de la demande: **08.08.2012**
(21) Numéro de dépôt: 12152730.3
(22) Date de dépôt: 26.01.2012
(51) Int. Cl.: G01S 3/803, G03H 3/00, H04R 1/40

(54) **Dispositif de localisation acoustique**

(30) Priorité: 04.02.2011 FR 1150925
(71) Demandeur: MICRODB, 69130 Ecully (FR); Airbus Operations SAS, 31060 Toulouse (FR)
(72) Inventeur: Beguet, Bernard, 69210 SAINT BEL (FR); Lamotte, Lucille, 69480 LACHASSAGNE (FR); Cariou, Charles, 31880 SALVETAT SAINT GILLES (FR)
(74) Mandataire: Maureau, Philippe

(57) **Abrégé**

Dispositif de localisation de sources acoustiques et/ou de mesure de leurs intensités, destiné en particulier à être utilisé en milieu confiné. Le dispositif comporte au moins une antenne acoustique (4) comportant au moins une première série de microphones (7) délimitant un premier volume, et au moins une deuxième série de microphones (8) délimitant un volume contenant au moins substantiellement la première série de microphones (7).

## Description

La présente invention a pour objet un dispositif de localisation de sources acoustiques et/ou de mesure de leurs intensités.

Lors du développement d'un nouveau produit dans l'industrie, la réalisation du confort acoustique de l'utilisateur final est devenue une problématique aussi importante que l'aspect visuel du produit. Cette problématique est d'autant plus présente si le produit en question est un véhicule de transport, tel qu'un avion, dont le fonctionnement est source de forte gêne sonore pour les personnes transportées. Pour mieux identifier et limiter les sources acoustiques à l'origine de ces gênes sonores, il est connu d'utiliser un dispositif de localisation de sources acoustiques et/ou de mesure de leurs intensités comportant au moins une antenne acoustique.

Un tel dispositif de localisation acoustique permet de déterminer précisément l'emplacement et l'intensité des sources acoustiques et ainsi de définir la méthode la plus appropriée pour les limiter ou les supprimer. Pour permettre une telle détermination, l'antenne acoustique d'un tel dispositif de localisation comporte une série de microphones reliés à un système de traitement des signaux du dispositif de localisation. Ce système de traitement permet de restituer par calcul une distribution de sources acoustiques.

Pour les milieux confinés, tels que l'habitacle d'un avion, un tel dispositif de localisation doit permettre une localisation spatiale précise des sources acoustiques, ceci quels que soient leurs emplacements dans le milieu confiné. Il est connu de l'état de la technique et notamment du brevet européen EP 1 557 688, d'utiliser, pour obtenir une telle localisation, un dispositif comprenant une antenne acoustique comportant une série de microphones affleurant sur la surface rigide d'une sphère. Une telle antenne acoustique, par une disposition tridimensionnelle des microphones et la réalisation d'une opération de focalisation, c'est-à-dire la réalisation d'une somme pondérée des signaux prenant en compte la fonction de propagation entre le point de calcul et le point de mesure, du type formation de voie, sur une distribution de points sources éventuels ou points de calcul, incluant la diffraction du corps rigide sphérique, permet de déterminer la localisation spatiale précise de chaque source acoustique.

Néanmoins, la résolution d'un tel dispositif de localisation est déterminée et est limitée par le volume de l'antenne acoustique. Or la destination d'un tel dispositif de localisation aux mesures dans des milieux confinés limite les dimensions des antennes acoustiques de type rigide utilisées, afin de ne pas modifier le champ acoustique émis par ces dernières, et donc la résolution spatiale du dispositif de localisation. De plus l'augmentation du volume d'une telle antenne conduit à une augmentation substantielle du nombre de microphones, pour opérer sur la même bande de fréquence. Il aurait été alors avantageux d'utiliser une répartition de microphones sur une surface non rigide de plus grand volume mais la dynamique de localisation en serait amoindrie et conduirait à l'obtention de sources « fantôme ».

La présente invention vise à remédier à cet inconvénient, tout en opérant sur la même bande de fréquence.

Le problème technique à la base de l'invention consiste donc à fournir un dispositif de localisation de sources acoustiques et/ou de mesure de leurs intensités dédié aux milieux confinés assimilables à une distribution géométrique quelconque de points source comprenant une antenne acoustique qui permette une résolution spatiale optimisée et une dynamique optimisée sur une grande plage fréquentielle sans interaction sur le champ acoustique émis, par rapport à un dispositif comprenant une antenne acoustique de l'art antérieur occupant un même volume et opérant dans la même bande de fréquence. Ce système doit avoir en outre l'avantage de localiser des sources sur un volume quelconque et apporte un gain de ce fait par rapport à la méthode d'holographie acoustique en onde sphérique travaillant à partir de la mesure d'un champ acoustique projeté sur un volume uniquement sphérique.

A cet effet, l'invention concerne un dispositif de localisation de sources acoustiques et/ou de mesure de leurs intensités destiné en particulier à être utilisé en milieu confiné, ledit dispositif de localisation comprenant au moins une antenne acoustique comportant au moins une première série de microphones distribués selon une surface fermée délimitant un premier volume, le dispositif de localisation étant **caractérisé en ce que** l'antenne comporte en outre au moins une deuxième série de microphones délimitant un volume contenant au moins substantiellement la première série de microphones et en ce que le dispositif comprend en outre un système de traitement comportant des moyens de focalisation couplé à des moyens de calcul interspectral, conçus pour traiter par focalisation sur une distribution de points sources éventuels, des signaux de mesure de pression acoustique générés par la première et la deuxième séries de microphones de la ou de chaque antenne acoustique et effectuer en chaque point source de calcul une opération de multiplication, c'est-à-dire le calcul du produit interspectral des valeurs de pression acoustique rétropropagée, obtenues pour la première et la deuxième séries de microphones de la ou de chaque antenne acoustique.

La disposition d'une deuxième série de microphones délimitant un volume contenant substantiellement la première série de microphones, permet une augmentation substantielle du volume de l'antenne acoustique, avec un nombre limité de microphones. On obtient ainsi un dispositif de localisation de sources et/ou de mesure de leurs intensités permettant de réaliser une localisation de sources acoustiques avec une meilleure résolution spatiale par rapport à un dispositif comportant une antenne acoustique de l'art antérieur. Le traitement interspectral sur les pressions focalisées permet de conserver une bonne résolution liée à la deuxième série de microphones sur un plus grand volume et de maintenir une bonne dynamique lié à la suppression des sources fantôme non cohérentes entre deux distributions de microphones.

Préférentiellement, le volume délimité par la deuxième série de microphones contient l'intégralité de la première série de microphones.

Une telle disposition de la première série de microphones permet de limiter le volume de l'antenne acoustique à celui délimité par la deuxième surface fermée.

Selon une forme d'exécution préférée, au moins l'un des volumes délimités par les deux séries de microphones est sensiblement sphérique.

Une disposition des microphones selon une surface fermée sphérique permet, pour une opération de focalisation acoustique selon les signaux issus de ces microphones, d'utiliser une décomposition en harmoniques sphériques, simplifiant ainsi l'opération de rétropropagation à partir de pression mesurée autour d'un volume rigide.

Avantageusement, le premier et le deuxième volumes sont sensiblement sphériques et concentriques.

La disposition de la première et de la deuxième séries de microphones selon respectivement un premier et un deuxième volumes sphériques permet, pour une opération de focalisation acoustique des signaux issus des microphones de la première et la deuxième séries de microphones, d'utiliser des décompositions en harmoniques sphériques, simplifiant ainsi les opération de focalisation pour la première série de microphones.

Selon une autre forme d'exécution, au moins l'un des premier et deuxième volumes est sensiblement cylindrique.

Une disposition des microphones selon une surface délimitant un volume cylindrique permet, pour une opération de focalisation acoustique selon les signaux issus de ces microphones, d'utiliser une décomposition en harmoniques cylindriques, simplifiant ainsi l'opération de focalisation. De plus, une telle surface permet d'élargir le champ mesuré suivant une direction s'adaptant à la géométrie d'un milieu confiné allongé

De manière avantageuse, le premier et le deuxième volume sont sensiblement cylindriques, et les cylindres sont coaxiaux.

Une disposition des microphones selon deux surfaces cylindriques permet, pour une opération de focalisation acoustique selon les signaux issus de ces microphones, d'utiliser une décomposition en harmoniques cylindriques, simplifiant ainsi l'opération de focalisation.

Avantageusement, la surface fermée est un support rigide, préférentiellement revêtu d'un matériau absorbant, sur lequel affleurent sensiblement les microphones de la première série et les microphones de la deuxième série sont supportés par une armature.

L'utilisation d'un support rigide pour la première série de microphones et d'une armature formant une extension du support rigide, pour la deuxième série de microphones, permet de combiner les avantages d'une disposition de microphones sur un support rigide à ceux d'une disposition de microphones selon un support ouvert qu'est une armature, à savoir, respectivement une dynamique et une résolution spatiale plus importantes.

Préférentiellement, le système de traitement comporte des moyens de calcul de cohérence agencés pour calculer, pour chaque point source de calcul, un niveau de cohérence entre les valeurs de pression acoustique rétropropagée obtenues à partir de chaque série de microphones de la ou de chaque antenne acoustique par les moyens de focalisation.

De tels moyens de calcul de cohérence permettent la détection de sources « fantômes » liées aux phénomènes de réverbération dans le milieu confiné dans lequel est utilisé le dispositif de localisation.

L'invention se rapporte également à un procédé de localisation de sources acoustiques et/ou de mesure de leurs intensités mettant en oeuvre un dispositif de localisation selon l'invention et comportant les étapes suivantes :
- recevoir les signaux de mesure de pression acoustique générés par la première et la deuxième séries de microphones de la ou de chaque antenne acoustique,
- réaliser en chaque point source de calcul un traitement de focalisation indépendant de signaux générés par la première série et par la deuxième série de microphones de la ou de chaque antenne acoustique,
- calculer le produit interspectral, en chaque point source de calcul, des valeurs de pression acoustique obtenues pour la première série et pour la deuxième série de microphones de la ou de chaque antenne acoustique lors du traitement de focalisation.

Un tel procédé de localisation permet une localisation des sources acoustiques et/ou la mesure de leurs intensités avec une meilleure résolution et une meilleur dynamique, puisque bénéficiant de l'utilisation d'une antenne acoustique comportant deux séries de microphones disposés selon un premier et un deuxième volume incluant au moins substantiellement le premier.

Avantageusement, le procédé de localisation de sources acoustiques et/ou de mesure de leurs intensités met en oeuvre un dispositif de localisation dont les moyens de focalisation sont conçus pour réaliser, en plusieurs points sources de calcul discrétisant l'espace d'émission acoustique et pour chaque série de microphones de la ou de chaque antenne acoustique un traitement de focalisation à partir de signaux de mesure de pression acoustique générés par la série de microphones correspondante de façon à obtenir pour chacun des points sources de calcul une valeur de pression acoustique pour la première et la deuxième séries de microphones de la ou de chaque antenne acoustique, et effectuer en chaque point source de calcul le produit interspectral des valeurs pression acoustique obtenues pour la première et la deuxième séries de la ou de chaque antenne acoustique, et comportant en outre l'étape suivante :
- déterminer pour chaque point source de calcul un niveau de cohérence entre les valeurs de pression acoustique obtenues à partir de chaque série de microphones par les moyens de focalisation.

Un tel procédé de localisation, permet une localisation des sources acoustiques et/ou de la mesure de leurs intensités avec détection des sources « fantômes » liées aux phénomènes de réverbération dans le milieu confiné de géométrie quelconque dans lequel est utilisé le dispositif localisation.

De toute façon l'invention sera bien comprise à l'aide de la description qui suit en référence au dessin schématique annexé représentant, à titre d'exemples non limitatifs, trois formes d'exécution de ce dispositif de localisation de sources acoustiques et/ou de mesure de leurs intensités et de ce procédé de localisation de sources acoustiques et/ou de mesure de leurs intensités.
La figure 1 est une vue schématique d'une première forme d'exécution de l'antenne acoustique;
la figure 2 est une vue schématique en situation de deux antennes acoustiques ;
la figure 3 est un organigramme présentant le procédé de localisation de sources acoustiques et/ou de mesure de leurs intensités ;
la figure 4 est une vue en coupe schématique d'une seconde forme d'exécution de l'antenne acoustique ;
la figure 5 est une vue schématique d'une troisième forme d'exécution de l'antenne acoustique.

Un dispositif de localisation de sources acoustiques et/ou de mesure de leurs intensités est utilisé pour déterminer précisément l'emplacement et/ou l'intensité de chaque source acoustique 2 dans un milieu confiné 3, tel que l'habitacle d'un avion.

Le dispositif de localisation comprend notamment au moins une antenne acoustique 4.

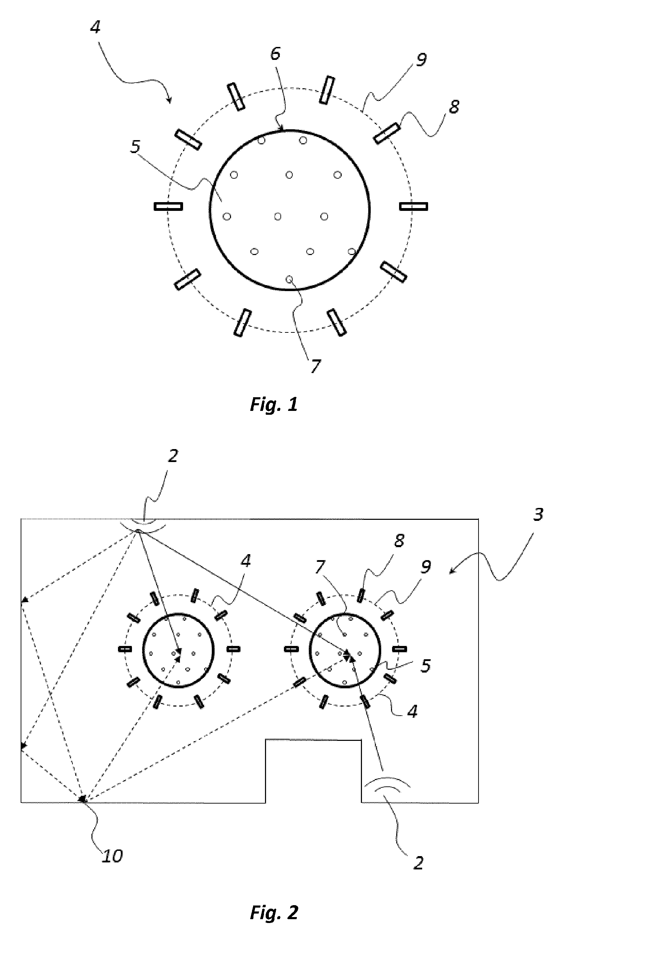

Selon une première forme d'exécution du dispositif de localisation, l'antenne acoustique 4 comprend, comme illustré sur la figure 1, un support rigide 5.

Ce support rigide 5 présente une forme sensiblement sphérique. La surface 6 du support rigide figure une première surface fermée délimitant un premier volume. Selon une possibilité de l'invention non illustrée, le support rigide 5 est revêtu d'un matériau réfléchissant.

L'antenne acoustique 4 comprend en outre une première série de microphones 7. Les microphones 7 sont montés sur le support rigide 5 et affleurent sensiblement la surface 6 du support rigide 5. Les microphones 7 sont préférentiellement distribués sensiblement régulièrement sur le support rigide 5.

L'antenne acoustique 4 comprend en outre une deuxième série de microphones 8. L'antenne acoustique 4 comprend également une armature 9 pour les microphones 8. L'armature 9 est conçue de manière à être perméable au son.

L'armature 9 des microphones 8 présente une forme générale sensiblement sphérique et est concentrique au support rigide 5. L'armature 9 de la deuxième série de microphones 8 présente un diamètre sensiblement supérieur à celui du support rigide 5.

L'armature 9 des microphones 8 figure une deuxième surface fermée délimitant un deuxième volume. Le deuxième volume figuré par l'armature contient les microphones 7 de la première série.

Les microphones 8 sont montés sur l'armature 9. La distribution des microphones 8 sur l'armature 9 est sensiblement régulière.

Le dispositif de localisation comprend en outre un système de traitement (non représenté). Ce système de traitement prend préférentiellement la forme soit d'une unité de calcul indépendante reliée à un ordinateur, soit d'un ordinateur équipé de moyens d'acquisition de signaux de mesure de pression acoustique générés par des microphones.

Le système de traitement est relié à l'antenne acoustique 4 de manière à recevoir des signaux de mesure de pression acoustique générés par la première et la deuxième séries de microphones 7, 8 de l'antenne acoustique 4.

La liaison entre le système de traitement et la première et deuxième séries de microphones 7, 8 peut être filaire ou avantageusement sans fil, tel qu'une transmission wifi ou radiofréquence.

Le système de traitement traite des signaux de chaque série de microphones 7, 8 en une distribution de plusieurs points sources de calcul du milieu confiné 3 de manière à réaliser un hologramme des sources acoustiques 2 présentes dans ce milieu confiné 3.

Le système de traitement comprend des moyens de focalisation (non représentés) des signaux de mesure de pression acoustique générés par la première et la deuxième séries de microphones 7, 8 de l'antenne acoustique 4.

Les moyens de focalisation sont conçus pour réaliser, en plusieurs points de calcul et pour chaque série de microphones 7, 8 de l'antenne acoustique 4 un traitement de focalisation à partir de signaux de mesure de pression acoustique générés par la série de microphones 7, 8 correspondante. Le traitement de focalisation des moyens de focalisation est réalisé de façon à obtenir pour chacun des points de calcul une valeur de pression acoustique pour la première et la deuxième séries de microphones 7, 8 de l'antenne acoustique 4, et effectuer en chaque point de calcul le produit interspectral des valeurs de pression acoustique obtenues pour la première et la deuxième séries de microphones 7, 8.

Le système de traitement comprend en outre des moyens de calcul de cohérence (non représentés) agencés pour calculer, pour chaque point source éventuel de calcul, un niveau de cohérence entre les valeurs de pression acoustique obtenues à partir de chaque série de microphones 7, 8 de l'antenne acoustique 4 par les moyens de focalisation.

Le système de traitement est agencé de manière à traiter les signaux issus de la première et de la deuxième séries de microphones 7, 8 selon un procédé de localisation de sources acoustiques et/ou de mesure de leurs intensités illustré sur le logigramme et comportant les étapes consistant à:
- A) recevoir les signaux de mesure de pression acoustique générés par la première et la deuxième séries de microphones 7, 8 de l'antenne acoustique 4,
- B) réaliser en chaque point de la distribution de sources éventuelles un traitement de focalisation indépendant des signaux de mesure de pression acoustique générés par la première série et par la deuxième série de microphones 7, 8 de l'antenne acoustique 4,
- C) calculer le produit interspectral, en chaque point source de calcul, des valeurs de pression acoustique obtenues pour la première série et pour la deuxième série de microphones 7, 8 de l'antenne acoustique 4 lors du traitement de focalisation,
- D) déterminer pour chaque point source de calcul un niveau de cohérence entre les valeurs de pression acoustique obtenues à partir de la première série et de la deuxième série de microphones 7, 8 de l'antenne acoustique 4 lors du traitement de focalisation,
- E) Afficher ou tracer un hologramme présentant les valeurs de pression acoustique et les niveaux de cohérence obtenus pour chacun des points de calcul de la distribution de sources éventuelles, les sources acoustiques 2 étant repérées par les niveaux de pression acoustique maximum présentant un haut niveau de cohérence.

Un tel procédé permet une localisation précise des sources acoustiques 2 en permettant d'exclure des sources « fantômes » 10 liées aux phénomènes de réverbération et aux artefacts du traitement par l'utilisation des niveaux de cohérence calculés.

Lors de l'utilisation d'un tel dispositif de localisation dans un milieu confiné 3, tel que celui illustré par la figure 2, la procédure consiste à placer l'antenne acoustique 4 dans le milieu confiné 3 à distance des bords du milieu confiné 3 et à mettre en oeuvre le procédé de localisation de sources acoustiques et/ou de mesure de leurs intensités afin d'obtenir un hologramme des sources acoustiques 2.

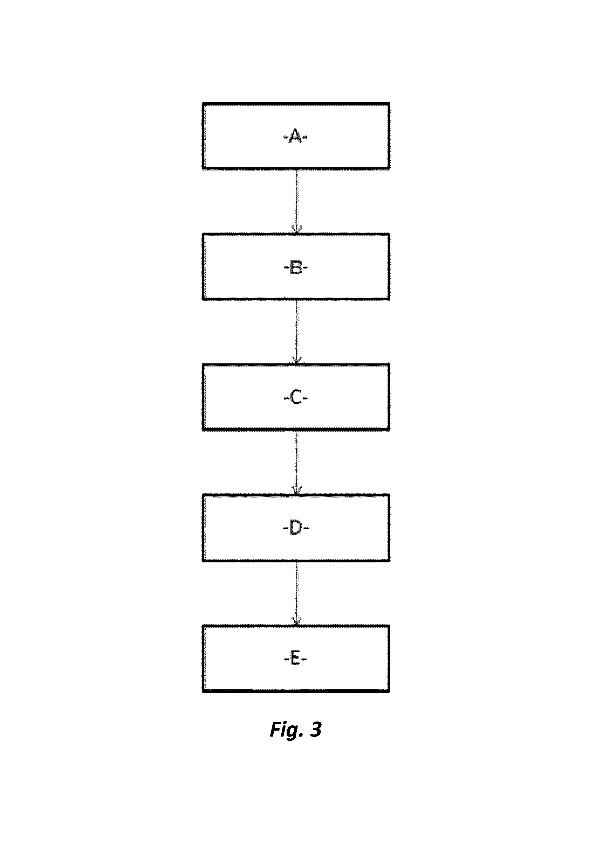

Selon une possibilité de l'invention illustrée sur la figure 3, le dispositif de localisation peut être équipé de deux antennes acoustiques 4 pour offrir une meilleure résolution spatiale et dynamique. Selon cette possibilité de l'invention, le système de traitement est agencé pour recevoir séparément les signaux issus de chaque série de microphones 7, 8 de chacune des antennes acoustiques 4.

Les moyens de focalisation traitent en chaque point source de calcul séparément la première et la deuxième séries de microphones 7, 8 de chacune des deux antennes acoustiques 4. Les valeurs de pression acoustique ainsi obtenues pour la première et la deuxième série de microphones 7, 8 de chaque antenne acoustique 4 sont multipliées dans un calcul interspectral de manière à définir une valeur de pression acoustique en chaque point source de calcul.

Les moyens de calcul de cohérence déterminent un niveau de cohérence en chaque point source de calcul à partir des valeur de pressions acoustiques déterminées pour la première et la deuxième séries de microphones 7, 8 de chacune des deux antennes acoustiques 4 par les moyens de focalisation.

Les moyens de traitement permettent ainsi l'obtention d'un hologramme présentant, pour chacun des points sources de calcul, les valeurs de pression acoustique et les niveaux de cohérence obtenus.

Le dispositif de localisation peut également être équipé d'une antenne acoustique 4 d'une autre forme.

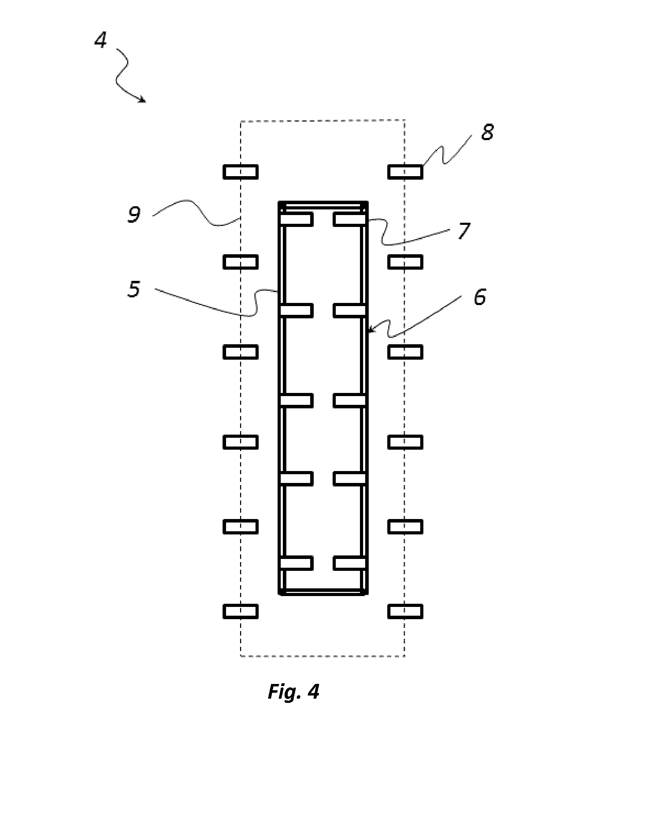

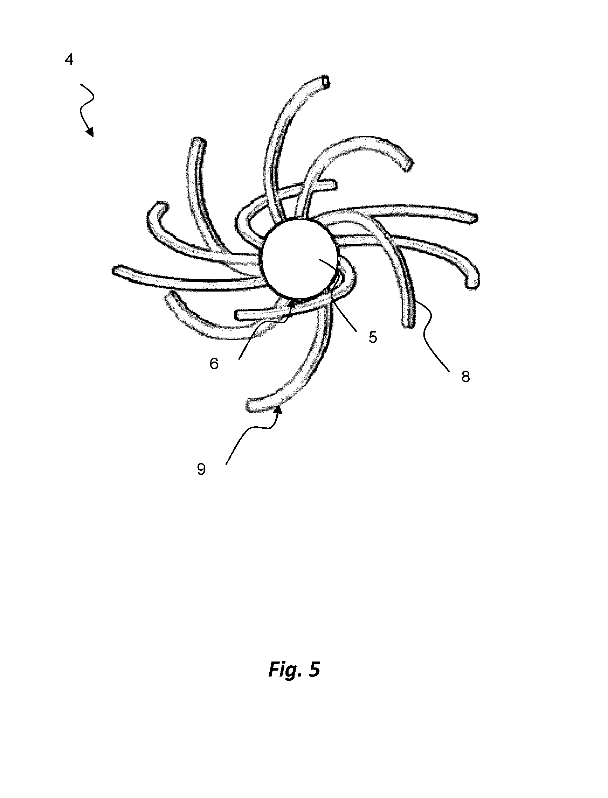

Une telle antenne acoustique 4 est illustrée sur les figures 4 et 5, les références numériques utilisées restant identiques à celles utilisées pour la première forme d'exécution de l'antenne acoustique 4.

Une telle antenne acoustique 4 se différencie de l'antenne acoustique 4 selon la première forme d'exécution en ce que les volumes délimités par les deux séries de microphones ne sont pas sphériques et en ce que le support rigide 5 de la première série de microphones 7 et l'armature 9 de la deuxième série de microphones 8 présentent des formes différentes de sphères.

Selon cette forme de réalisation la première et la deuxième série de microphones délimitent des volumes sensiblement cylindriques et coaxiaux.

Dans la forme d'exécution représentée à la figure 5, la première série de microphones 7 est disposée sur une sphère 6, à partir de laquelle s'étendent des bras cintrés 9, en forme d'arcs de cercles, formant une armature, sur laquelle sont montés des microphones 8, au nombre d'au moins un par bras, pour former une seconde série de microphones ou une troisième ou une quatrième série de microphones, suivant le nombre de microphones disposés sur chaque bras.

Un dispositif de localisation comportant une telle antenne acoustique 4 présente un fonctionnement similaire à celui d'un dispositif de localisation comportant une antenne acoustique 4 selon la première forme d'exécution.

De même un dispositif de localisation peut comporter deux antennes acoustiques 4 selon la seconde forme de réalisation ou une antenne acoustique 4 selon la première forme de réalisation en combinaison avec une antenne acoustique 4 selon la seconde ou la troisième forme d'exécution sans que cela change le principe général de fonctionnement du dispositif de localisation.

Comme il va de soi, l'invention ne se limite pas aux seules formes d'exécution de ce dispositif de localisation de sources acoustiques et/ou de mesure de leurs intensités, décrites ci-dessus à titre d'exemples, elle en embrasse au contraire toutes les variantes de réalisation. Ainsi les différentes séries de microphones pourraient définir des volumes différents de ceux décrits précédemment, avec possibilité de recoupement partiel entre deux volumes successifs.

## Revendications

1. Dispositif de localisation de sources acoustiques et/ou de mesure de leurs intensités destiné en particulier à être utilisé en milieu confiné (3), ledit dispositif de localisation comprenant au moins une antenne acoustique (4) comportant au moins une première série de microphones (7) distribués selon une surface fermée délimitant un premier volume,
le dispositif de localisation **étant caractérisé en ce que** l'antenne comporte en outre au moins une deuxième série de microphones (8) délimitant un volume contenant au moins substantiellement la première série de microphones (7) et **en ce que** le dispositif comprend en outre un système de traitement comportant des moyens de focalisation, couplé à des moyens de calcul interspectral, conçus pour traiter par focalisation sur une distribution de points sources éventuels, des signaux de mesure de pression acoustique générés par la première et la deuxième séries de microphones (7, 8) de la ou de chaque antenne acoustique (4) et effectuer en chaque point source de calcul une opération de multiplication, c'est-à-dire le calcul du produit interspectral des valeurs de pression acoustique rétropropagée obtenues pour la première et la deuxième séries de microphones (7, 8) de la ou de chaque antenne acoustique (4).

2. Dispositif de localisation selon la revendication 1, **caractérisé en ce que** le volume délimité par la deuxième série de microphones(8) contient l'intégralité de la première série de microphones (7).

3. Dispositif de localisation selon la revendication 1 ou 2, **caractérisé en ce qu'**au moins l'un des volumes délimités par les deux séries de microphones est sensiblement sphérique.

4. Dispositif de localisation selon la revendication 3, **caractérisé en ce que** les premier et le deuxième volumes sont sensiblement sphériques et concentriques.

5. Dispositif de localisation selon la revendication 1 ou 2, **caractérisé en ce qu'**au moins l'un des premier et deuxième volumes est sensiblement cylindrique.

6. Dispositif de localisation selon l'une des revendications 1, 2 et 5, **caractérisé en ce que** le premier et le deuxième volumes sont sensiblement cylindriques, et **en ce que** les cylindres sont coaxiaux.

7. Dispositif de localisation selon l'une des revendications 1 à 6, **caractérisé en ce que** la surface fermée est un support rigide (5), préférentiellement revêtu d'un matériau absorbant, sur lequel affleurent sensiblement les microphones (7) de la première série et **en ce que** les microphones (8) de la deuxième série sont supportés par une armature (9).

8. Dispositif de localisation selon la revendication 1, **caractérisé en ce que** le système de traitement comporte des moyens de calcul de cohérence agencés pour calculer, pour chaque point source de calcul, un niveau de cohérence entre les valeurs de pression acoustique rétropropagée obtenues à partir de chaque série de microphones (7, 8) de la ou de chaque antenne acoustique (4) par les moyens de focalisation.

9. Dispositif de localisation selon l'une des revendications 7 et 8, **caractérisé en ce que** le dispositif de localisation comporte deux antennes acoustiques (4) selon les revendications 4 et 7.

10. Procédé de localisation de sources acoustiques et/ou de mesure de leurs intensités, **caractérisé en ce qu'**il met en oeuvre un dispositif de localisation selon l'une des revendications 1 à 9 et **en ce qu'**il comporte les étapes suivantes :
- recevoir les signaux de mesure de pression acoustique générés par la première et la deuxième séries de microphones (7, 8) de la ou de chaque antenne acoustique (4),
- réaliser, en chaque point de la distribution de sources éventuelles, un traitement de focalisation indépendant de signaux de mesure de pression acoustique générés par la première série et par la deuxième série de microphones (7,8) de la ou de chaque antenne acoustique (4),
- calculer le produit interspectral, en chaque point de la distribution de sources éventuelles, des valeurs de pression acoustique obtenues pour la première série et pour la deuxième série de microphones (7, 8) de la ou de chaque antenne acoustique (4) lors du traitement de focalisation.

11. Procédé de localisation selon la revendication 10, **caractérisé en ce qu'**il met en oeuvre un dispositif de localisation selon la revendication 10 en combinaison avec la revendication 9 et **en ce qu'**il comporte en outre l'étape suivante :
- déterminer, pour chaque point de distribution de sources éventuelles, un niveau de cohérence entre les valeurs de pression acoustique obtenues à partir de chaque série de microphones (7, 8) de la ou chaque antenne (4) par les moyens de focalisation.
